# EUROPÄISCHE PATENTSCHRIFT

(11) **EP 0 863 334 B1**
(45) Veröffentlichungstag und Bekanntmachung des Hinweises auf die Patenterteilung: **02.07.2003**
(21) Anmeldenummer: 98103491.1
(22) Anmeldetag: 27.02.1998
(51) Int. Cl.: F16J 3/04

(54) **Faltenbalg**
Bellow
Soufflet

(30) Priorität: 05.03.1997 DE 19708932
(43) Veröffentlichungstag der Anmeldung: 09.09.1998
(73) Patentinhaber: ContiTech Vibration Control GmbH, 30165 Hannover (DE)
(72) Erfinder: Liebich, Charl, 29451 Dannenberg (DE); Ganswindt, Helmut, 29451 Dannenberg (DE)
(74) Vertreter: Schneider, Egon

(56) Entgegenhaltungen:
- DE-U- 8 335 598
- GB-A- 2 296 946
- US-A- 4 224 808
- US-A- 4 852 891

## Beschreibung

Die Erfindung betrifft einen Faltenbalg zur Kapselung des Anschlußbereichs einer Kraftfahrzeug-Spurstange gemäß dem Oberbegriff des Patentanspruchs 1.

Ein derartiger Faltenbalg ist aus dem DE-GM 83 35 598 bekannt; allerdings wies der in dieser Druckschrift beschriebene Faltenbalg ebenso wie andere bekannte Ausführungsformen - insbesondere bei seiner Verwendung an Kraftfahrzeug-Spurstangen - einen für die Montage und Justierung der Spurstangen entscheidenden Nachteil auf: Durch Anziehen der den Befestigungsbund des Faltenbalges umfassenden Befestigungsschelle wurde der Befestigungsbund infolge der damit erzeugten Haftreibung so an der Spurstange fixiert, daß anschließend eine Drehung der Spurstange relativ zum Faltenbalg nicht mehr ohne weiteres möglich war. Wenn die Spurstange nachträglich eingestellt oder nachjustiert werden sollte, mußte zuvor jedes Mal die Befestigungsschelle gelöst werden.

In der GB-A- 2 296 946 ist ein Schutzbalg mit einem Befestigungsbund beschrieben, auf dessen Innenseite quaderförmige oder ringförmige Profilelemente vorgesehen sind, deren Stirnflächen axial und/oder in Umfangsrichtung verlaufen. Dabei sind die Profilelemente, bei der ringförmigen Variante deren Ausnehmungen, derart versetzt angeordnet, dass ein Überdruck im Schutzbalg nach außen abgebaut werden kann, ohne dass Schmiermittel aus dem Schutzbalg austritt.

Weiterhin ist aus der US-A-4 852 891 ein Kunststoffbalg bekannt, der aus thermoplastischem Harz durch Blasformen hergestellt ist und im Bereich eines Befestigungsbundes einen stationären Ring mit aufrechter Basiswand aufweist, die einen sicheren Sitz in der korrespondierenden Wand des abzudichtenden Bauteils findet. Bei Einsatz eines solchen Schutzbalges wird eine staubdichte Kapselung des betreffenden Bauteils erreicht.

Der Erfindung liegt die Aufgabe zugrunde, den Zeitaufwand bei der Justierung von Spurstangen zu verkürzen und die dabei auftretenden Ungenauigkeiten zu vermeiden sowie axiale Verspannungen des Faltenbalges und dadurch verursachte Defekte zu verhindern.

Die vorliegende Erfindung löst diese Aufgabe mit einem Faltenbalg der eingangs genannten Art, der die im kennzeichnenden Teil des Patentanspruchs 1 genannten Merkmale aufweist. In den Unteransprüchen sind vorteilhafte Ausführungsformen und Weiterbildungen der Erfindung gekennzeichnet.

Herkömmliche Faltenbälge sind durchweg so konstruiert, daß ihre Befestigungsbunde sich mittels spannbarer Befestigungsschellen möglichst absolut drehfest an den von ihnen umschlossenen Achskörpern, Anschlußstutzen oder dergleichen fixieren lassen. Anderenfalls wären beispielsweise die zur Kapselung der homokinetischen Gelenke an Kraftfahrzeug-Frontantrieben verwendeten sogenannten Achsmanschetten ständigen Torsionsbeanspruchungen ausgesetzt, die zu übermäßigem Verschleiß und vorzeitigen Defekten führen würden.

Im Gegensatz zu bekannten Konzepten geht die vorliegende Erfindung von dem Gedanken aus, daß es bei einem zur Kapselung des Anschlußbereichs einer Kraftfahrzeug-Spurstange geeigneten Faltenbalg vorteilhaft wäre, wenn sich die Spurstange auch bei fest angezogener Befestigungsschelle jederzeit leicht verdrehen ließe, so daß die Spurstange eingestellt oder nachjustiert werden könnte, ohne die Befestigungsschelle zu lockern oder zu lösen. Die Erfindung realisiert diesen neuen Gedanken dadurch, daß sie an der Innenwandung des Faltenbalg-Befestigungsbundes mit einem Schmiermittel füllbare Zwischenräume vorsieht und die Begrenzung dieser Fett-Taschen so gestaltet, daß das Schmiermittel sich durch geringste Verdrehungen des Befestigungsbundes gegenüber der Spurstange zwangsläufig keilartig unter die Kontaktflächen schiebt, mit denen der Befestigungsbund unter dem Anpreßdruck der Befestigungsschelle an der Spurstange anliegt.

Erfindungsgemäß wird dies dadurch erreicht, dass bei einem Faltenbalg der im Oberbegriff des Patentanspruchs 1 angegebenen Art die Merkmale des kennzeichnenden Teils des Patentanspruchs 1 realisiert werden, also
dass der Befestigungsbund an den axialen Enden seiner Innenfläche je eine nach radial innen gerichtete umlaufende Dichtlippe aufweist, zwischen denen die Vorsprünge angeordnet sind, dass die die Vorsprünge umschreibenden Begrenzungslinien zumindest in einem Teil ihres Verlaufs mit der Richtung der Längsachse des Befestigungsbundes einen von 90 Grad verschiedenen Winkel bilden,
dass die Vorsprünge am Übergang von ihrer nach radial innen gerichteten Stirnseite zu ihren Seitenflanken gerundet oder mit einer Fase ausgebildet sind,
dass an der Innenwand des Befestigungsbundes zwischen den umlaufenden Dichtlippen und zwischen den Vorsprüngen ein Freiraum (oder Freiräume) verbleibt, der mit einem Schmiermittel ausfüllbar ist, welches sich im bestimmungsgemäßen Einbauzustand des Faltenbalges durch geringste Verdrehung des Befestigungsbundes gegenüber der Spurstange zwangsläufig keilartig unter die Vorsprünge schieben läßt.

Durch die verschiedenen in den Unteransprüchen angegebenen Ausgestaltungen der Erfindung kann diese Wirkungsweise für den jeweiligen Anwendungsfall optimiert werden.

Die an den axialen Enden des Befestigungsbundes angeformten umlaufenden Dichtlippen bewirken, dass die sog. Fett-Taschen axial abgedichtet werden. Außerdem unterstützen sie die exakte axiale Positionierung des Befestigungsbundes auf der Spurstange.

Durch die Abrundung bzw. Anfasung der an die Innenfläche des Befestigungsbundes angeformten Vorsprünge und durch deren schiefwinklige Anordnung bezüglich der Richtung der Längsachse des Befestigungbundes wird erreicht, dass jegliches Verdrehen des Befestigungsbundes die Vorsprünge auf eine Schicht des in der Fett-Tasche neben ihnen gespeicherten Schmiermittels leicht aufgleiten lässt.

Die Zeichnung veranschaulicht die Erfindung anhand schematisch und nicht maßstäblich wiedergegebener Ausführungsbeispiele, und zwar zeigen
- die Figuren 1a, 1b und lc am Beispiel eines erfindungsgemäßen Faltenbalges, dessen Befestigungsbund an seiner Innenseite Vorsprünge in Form von schlangenlinienartig gekrümmten erhabenen Leisten aufweist, erstens einen axialen Längsschnitt durch das bundseitige Ende des Faltenbalges, zweitens eine Abwicklung der Bund-Innenfläche und drittens einen axialen Längsschnitt durch den entsprechenden Teil der zugehörigen Spurstange,
- die Figuren 2a, 2b und 2c sowie 3a, 3b und 3c entsprechende Darstellungen von erfindungsgemäßen Ausführungsformen, bei denen die Vorsprünge an der Bund-Innenfläche als achsparallele Leisten bzw. als regelmäßig angeordnete kreisrunde Noppen ausgebildet sind und
- die Figuren 4, 5 und 6 anhand der Abwicklungen der Bund-Innenflächen von Faltenbälgen weitere vorteilhafte Ausführungsbeispiele für die erfindungsgemäße Gestaltung der besagten Vorsprünge in einem anderen Maßstab.

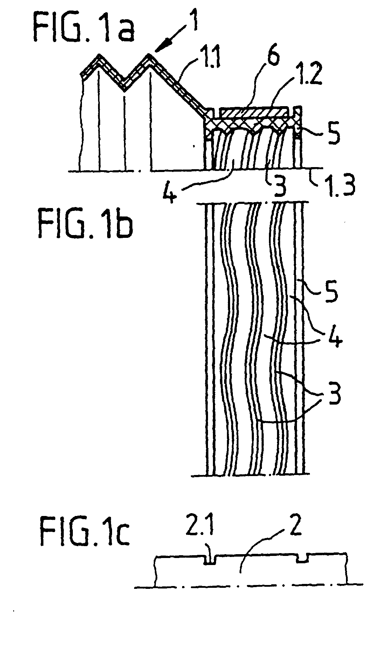

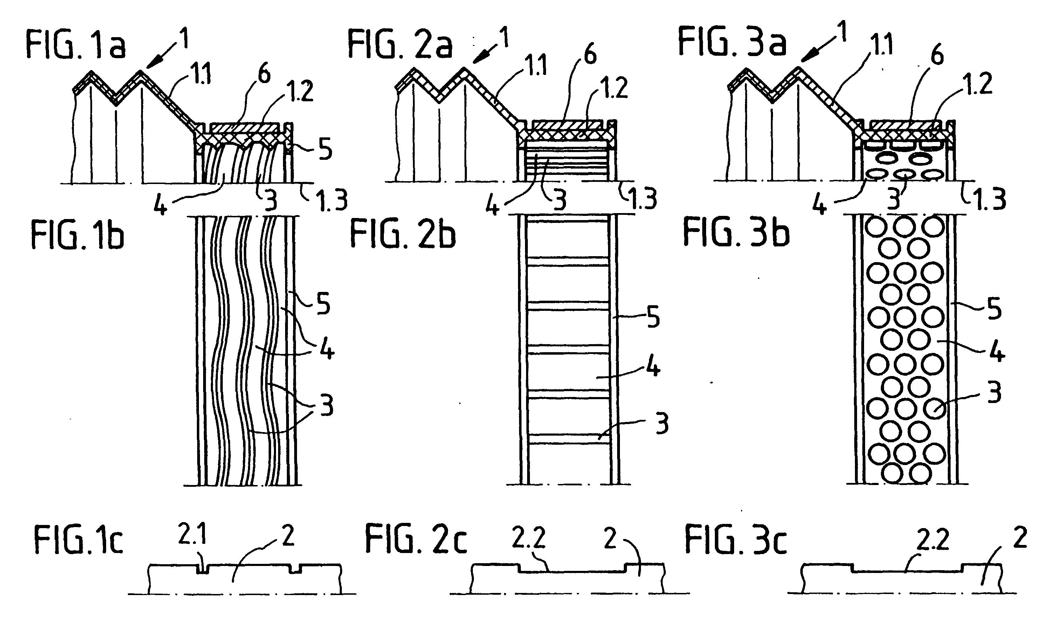

Figur 1a zeigt einen teilweisen Längsschnitt eines Faltenbalges 1 mit dem Faltenkörper 1.1 und dem Befestigungsbund 1.2, der mittels einer Befestigungsschelle 6 an einer in Figur 1c im Längsschnitt dargestellten Spurstange 2 fixierbar ist. Um eine exakte axiale Zuordnung zwischen Balg und Spurstange zu gewährleisten, weist die Spurstange Nuten 2.1 auf, in die entsprechend an den axialen Enden des Befestigungsbundes 1.2 angeformte umlaufende Dichtlippen 5 eingreifen und so den Befestigungsbund in einer exakt definierten axialen Position festlegen.

An die Innenfläche des Befestigungsbundes sind Vorsprünge in Form von erhabenen Leisten 3 mit dreieckigem Querschnitt angeformt, die schlangenlinienartig in Umfangsrichtung verlaufen und dabei in nahezu ihrem gesamten Verlauf mit der Längsachse 1.3 des Befestigungsbundes einen von 90° verschiedenen Winkel bilden. Die Freiräume 4 zwischen den Vorsprüngen 3 sind mit einem Schmiermittel gefüllt - sie bilden also sogenannte Fett-Taschen - und infolge des überwiegend schiefwinkligen Verlaufs der Ränder der Vorsprünge 3 führt bereits die kleinste Verdrehung des Befestigungsbundes 1.2 dazu, daß Schmiermittel unter die Vorsprünge gelangt und die weitere Verdrehung des Befestigungsbundes auf der Spurstange mit geringstem Kraftaufwand ermöglicht. Die Hemmung, die dabei an den umlaufenden Dicht- und Haltelippen 5 auftritt, denen aufgrund ihres rechtwinkligen Verlaufs zur Längsachse diese Schmierung nicht zugutekommen kann, ist vernachlässigbar gering, da sie außerhalb des Kompressionsbereichs der Befestigungsschelle 6 angeordnet sind.

Bei dem in den Figuren 2a, 2b und 2c wiedergegebenen Ausführungsbeispiel wird der Befestigungsbund 1.2 des Faltenbalges insgesamt von einer breiten, flachen, umlaufenden Nut 2.2 in der Spurstange 2 aufgenommen, wobei diese Nut bezüglich Anordnung und Breite mit dem axialen Abstand der Dicht- und Haltelippen 5 korrespondiert. Wie aus der Abwicklung in Figur 2b ersichtlich ist, sind die erfindungsgemäßen Vorsprünge 3 in diesem Fall als achsparallele, äquidistante Leisten ausgeführt.

Das dritte dargestellte Ausführungsbeispiel gemäß den Figuren 3a, 3b und 3c veranschaulicht die Möglichkeit, die erfindungsgemäßen Vorsprünge 3 an der Innenfläche des Befestigungsbundes 1.2 in Form von inselartig angeordneten, kreisrunden Noppen vorzusehen, wobei deren Zwischenräume 4 zwischen den Dichtlippen 5 als Schmiermittel-Reservoir zur Verfügung stehen.

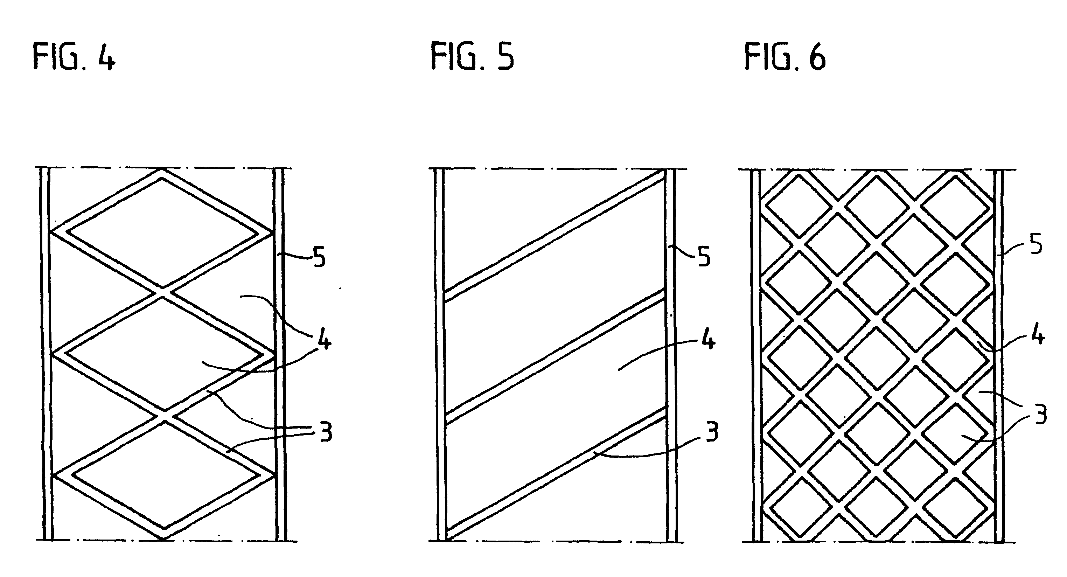

Die Figuren 4, 5 und 6 geben weitere Gestaltungsmöglichkeiten für die Innenwandung der Befestigungsbunde erfindungsgemäßer Faltenbälge wieder. Gemäß Figur 4 sind die Vorsprünge 3 als schiefwinklig verlaufende Leisten an die Innenwand des Befestigungsbundes angeformt, so daß sich zwischen ihnen rauten- bzw. dreieckförmige Fett-Taschen ergeben. Bei der Ausführugnsform gemäß Figur 5 werden die Vorsprünge 3 durch eine Schar schräg verlaufender, paralleler, leistenartiger Vorsprünge gebildet, und als Fett-Taschen stehen parallelogrammförmige Zwischenräume zur Verfügung. Figur 6 gibt ein Ausführungsbeispiel wieder, bei dem die Vorsprünge 3 rauten- bzw. dreieckförmig ausgebildet sind, und die zwischen ihnen über die Breite des Befestigungsbundes schiefwinklig bis an die Dichtlippen 5 verlaufenden Nuten bilden das Schmierstoffreservoir.

Die praktische Anwendung der vorliegenden Erfindung hat gezeigt, daß damit die gestellte Aufgabe in beeindruckender Weise gelöst werden konnte. Insbesondere schafft die vorliegende Erfindung die Möglichkeit, komplett vormontierte Lenkungen in die Kraftfahrzeug-Serienproduktion einlaufen zu lassen und nach deren Einbau in die Kraftfahrzeuge die endgültige Einstellung der Spur, die bekanntlich erst dann möglich ist, durchzuführen, ohne zu diesem Zweck die Schelle am Befestigungsbund des Spurstangen-Faltenbalges lösen und wieder anziehen zu müssen. Offenbar wird hierdurch nicht nur der Zeitaufwand verringert, sondern auch der organisatorische Ablauf wesentlich vereinfacht.

## Patentansprüche

1. Faltenbalg (1), insbesondere zur Kapselung des Anschlussbereichs einer Kraftfahrzeug-Spurstange (2), der aus einem thermoplastischen Elastomer gebildet ist und an einem der axialen Enden seines Faltenkörpers (1.1) einen Befestigungsbund (1.2) besitzt, der mittels einer Befestigungsschelle (6) an der Spurstange (2) fixierbar ist, wobei die Innenwand des Befestigungsbundes (1.2) nach radial innen gerichtete Vorsprünge (3) aufweist, die im bestimmungsgemäßen Einbauzustand des Faltenbalges (1) durch die radiale Anpresskraft der Befestigungsschelle (6) beaufschlagt werden, und wobei die die Vorsprünge (3) umschreibenden Begrenzungslinien zumindest in einem Teil ihres Verlaufs mit der Richtung der Längsachse (1.3) des Befestigungsbundes (1.2) einen von 90 Grad verschiedenen Winkel bilden,
**dadurch gekennzeichnet,**
**dass** der Befestigungsbund (1.2) an den axialen Enden seiner Innenfläche nach radial innen gerichtete umlaufende Dichtlippen (5) aufweist,
**dass** die Vorsprünge (3) am Übergang von ihrer nach radial innen gerichteten Stirnseite zu ihren Seitenflanken gerundet oder mit einer Fase ausgebildet sind und
**dass** an der Innenwand des Befestigungsbundes (1.2) zwischen den umlaufenden Dichtlippen (5) und zwischen den Vorsprüngen (3) Freiraum (4) verbleibt, der mit einem Schmiermittel ausfüllbar ist,
welches sich im bestimmungsgemäßen Einbauzustand des Faltenbalges (1) durch geringste Verdrehung des Befestigungsbundes (1.2) gegenüber der Spurstange (2) zwangsläufig keilartig unter die Vorsprünge (3) schieben läßt.

2. Faltenbalg nach Anspruch 1, **dadurch gekennzeichnet, dass** die Vorsprünge (3) nach Art von erhabenen Leisten an die Innenfläche des Befestigungsbundes (1.2) angeformt sind, die - insbesondere einander kreuzend - schiefwinklig und/oder parallel zur Richtung der Längsachse (1.3) verlaufen.

3. Faltenbalg nach Anspruch 2, **dadurch gekennzeichnet, dass** die leistenartigen Vorsprünge (3) gekrümmt - insbesondere schlangenlinienartig - verlaufen.

4. Faltenbalg nach Anspruch 1, **dadurch gekennzeichnet, dass** die Vorsprünge (3) inselartig in regelmäßiger oder unregelmäßiger Anordnung an die Innenfläche des Befestigungsbundes (1.2) angeformt sind.

5. Faltenbalg nach einem der Ansprüche 1 bis 4, **dadurch gekennzeichnet, dass** die Vorsprünge (3) ein Rautenmuster bilden.

6. Faltenbalg nach einem der Ansprüche 1 bis 5, **dadurch gekennzeichnet, dass** die Vorsprünge (3) insgesamt weniger als 50 % der Innenfläche des Befestigungbundes (1.2) bedecken.

## Claims

1. Expansion bellows (1), more especially for encasing the connecting region of an automotive vehicle track rod (2), which bellows is formed from a thermoplastic elastomeric material and has a mounting collar (1.2) on one of the axial ends of its folded body (1.1), said collar being securable on the track rod (2) by means of a fixing strap (6), the internal wall of the mounting collar (1.2) having radially inwardly orientated projection members (3), which are acted upon by the radial contact pressure of the fixing strap (6) when the expansion bellows (1) is in its designated assembled position, and the boundary lines, which circumscribe the projection members (3), forming with the direction of the longitudinal axis (1.3) of the mounting collar (1.2) an angle other than 90 degrees, at least along a portion of their path, **characterised in that** the mounting collar (1.2) has radially inwardly orientated, circumferential sealing lips (5) at the axial ends of its inner surface, **in that** the projection members (3) are rounded at the transitional region from their radially inwardly orientated end face to their side flanks or are provided with a chamfer, and **in that** a cavity (4), which can be filled with a lubricant, remains at the internal wall of the mounting collar (1.2) between the circumferential sealing lips (5) and between the projection members (3), the lubricant being able to slide forcibly beneath the projection members (3) in a wedge-shaped manner by the slightest twist of the mounting collar (1.2) relative to the track rod (2) when the expansion bellows (1) is in its designated assembled position.

2. Expansion bellows according to claim 1, **characterised in that** the projection members (3) are shaped to fit on the inner surface of the mounting collar (1.2) in the form of raised strips which extend at an oblique angle relative to and/or parallel to the direction of the longitudinal axis (1.3) - more especially so as to intersect one another.

3. Expansion bellows according to claim 2, **characterised in that** the strip-like projection members (3) extend in a curved manner - more especially in an undulatory manner.

4. Expansion bellows according to claim 1, **characterised in that** the projection members (3) are shaped to fit on the inner surface of the mounting collar (1.2) in an insular manner in a regular or irregular disposition.

5. Expansion bellows according to one of claims 1 to 4, **characterised in that** the projection members (3) form a rhomboidal pattern.

6. Expansion bellows according to one of claims 1 to 5, **characterised in that** the projection members (3) altogether cover less than 50 % of the inner surface of the mounting collar (1.2).

## Revendications

1. Soufflet (1), en particulier pour l'encapsulage de la zone de raccordement d'une barre d'accouplement (2) d'un véhicule automobile, lequel soufflet est constitué d'un élastomère thermoplastique et comprend, au niveau de l'une des extrémités axiales de son corps (1.1), un épaulement de fixation (1.2) qui peut être fixé sur la barre d'accouplement (2) au moyen d'un collier de fixation (6), où la paroi intérieure de l'épaulement de fixation (1.2) comprend des parties saillantes (3) tournées vers l'intérieur, en direction radiale, lesquelles parties saillantes sont sollicitées par la force de compression radiale du collier de fixation (6) lorsque le soufflet (1) est monté conformément aux prescriptions, et où les lignes de délimitation définissant les parties saillantes (3) forment, au moins dans une partie de leur profil, un angle différent de 90 degrés, avec la direction de l'axe longitudinal (1.3) de l'épaulement de fixation (1.2),
**caractérisé**
**en ce que** l'épaulement de fixation (1.2) comprend, au niveau des extrémités axiales de sa surface intérieure, des lèvres d'étanchéité circulaires (5) s'étendant vers l'intérieur, en direction radiale,
**en ce que** les parties saillantes (3), au niveau du passage entre leur face frontale tournée vers l'intérieur, en direction radiale, et leurs flancs latéraux, sont arrondies ou bien sont conformées avec un chanfrein, et
**en ce qu'**il subsiste, au niveau de la paroi intérieure de l'épaulement de fixation (1.2), un espace libre (4) entre les lèvres d'étanchéité circulaires (5) et entre les parties saillantes (3), lequel espace libre peut être rempli avec un lubrifiant qui, lorsque le soufflet (1) est monté conformément aux prescriptions, se laisse déplacer, coercitivement, en forme de coin, sous les parties saillantes (3), sous l'effet de la plus faible torsion de l'épaulement de fixation (1.2) par rapport à la barre d'accouplement (2).

2. Soufflet selon la revendication 1, **caractérisé en ce que** les parties saillantes (3) sont conformées, sur la surface intérieure de l'épaulement de fixation (1.2), à la façon de moulures en relief qui s'étendent - en particulier en se croisant - à angle oblique et/ou parallèlement à la direction de l'axe longitudinal (1.3).

3. Soufflet selon la revendication 2, **caractérisé en ce que** les parties saillantes (3) en forme de moulures s'étendent de façon courbe, en particulier suivant des lignes en forme de serpentin.

4. Soufflet selon la revendication 1, **caractérisé en ce que** les parties saillantes (3) sont conformées sur la surface intérieure de l'épaulement de fixation (1.2), suivant un agencement régulier ou irrégulier en forme d'îlots.

5. Soufflet selon l'une quelconque des revendications 1 à 4, **caractérisé en ce que** les parties saillantes (3) forment un dessin en losange.

6. Soufflet selon l'une quelconque des revendications 1 à 5, **caractérisé en ce que** les parties saillantes (3) recouvrent, en tout, moins de 50 % de la surface intérieure de l'épaulement de fixation (1.2).
